(19) Europäisches Patentamt / European Patent Office / Office européen des brevets

(11) EP 3 193 485 B1

(12) **EUROPEAN PATENT SPECIFICATION**

(45) Date of publication and mention
of the grant of the patent:
**08.05.2019 Bulletin 2019/19**

(51) Int Cl.:
*H04L 29/06* (2006.01)     *G06F 21/57* (2013.01)
*H04L 9/32* (2006.01)

(21) Application number: **16151636.4**

(22) Date of filing: **18.01.2016**

(54) **DEVICE, SERVER, SYSTEM AND METHOD FOR DATA ATTESTATION**

VORRICHTUNG, SERVER, SYSTEM UND VERFAHREN ZUR DATENBESCHEINIGUNG

DISPOSITIF, SERVEUR, SYSTÈME ET PROCÉDÉ POUR UNE ATTESTATION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2017 Bulletin 2017/29**

(73) Proprietor: **Huawei Technologies Co., Ltd.
Longgang District
Shenzhen, Guangdong 518129 (CN)**

(72) Inventor: **Rein, Andre
80992 Munich (DE)**

(74) Representative: **Kreuz, Georg Maria
Huawei Technologies Duesseldorf GmbH
Riesstraße 25
80992 München (DE)**

(56) References cited:
**WO-A1-2014/060633      US-A1- 2011 010 543
US-A1- 2011 035 577      US-A1- 2012 266 209**

EP 3 193 485 B1

**Description**

<u>TECHNICAL FIELD</u>

This invention relates generally to a field of computer systems. More particularly, the invention relates to data attestation.

<u>BACKGROUND</u>

Today's computer devices face a huge variety of potential threats. Due to the nature and diversity of those threats, the manifold of different computer devices, and their individual vulnerabilities, it is a challenging task to detect and protect both computer devices and systems comprising computer devices.

In order to protect mentioned systems, Trusted Computing Technologies can be used to facilitate the detection and thus help to prevent devices to behave maliciously without being noticed. The core idea of Trusted Computing is the introduction of a particular device state that describes whether the device behaves as it is intended to do or not. In particular, the behavior of a device is defined by its individual components both hardware and software. Hardware components are clearly defined and mostly predetermined, and thus do usually not change during the system lifetime. Thus, such components usually do not affect the state of the device.

On the other hand, the device state is mainly influenced by its software components. The device state comprises the complete boot process of the device and all programs executed on the device in past, i.e. during at least a portion of its lifetime, and present. As the device state may change continuously, depending on the execution of particular programs, the device state is volatile and only reflects a certain point in time in which the device remained at the time of the measurement and until something changed which altered this state.

Typically, a Trusted Platform Module (TPM) is used as an anchor, to monitor and manage the current device state. The TPM provides certain interfaces, in order to update relevant information continuously and also to report it to authorized components asking for the current device state. Such an authorized component is able to create a device measurement report and expose this report to an external device. An external device can examine this device state report, and make a decision whether it considers the device state as trustworthy or not. In order to make this decision about the compliance of the remote device, the measurement data inside the report are verified by comparison against well-known reference values. Those reference values represent well-known software components, i.e. a concrete version of software, which was executed on the device. If the software component was unintentionally altered, and thus cannot be successfully compared to a reference value, the device reaches an unknown state and is considered untrustworthy.

The protocol which exchanges and preserves the integrity of the device state reports during transport is called a Remote Attestation Protocol. The basic idea of the protocol is based on certain TPM generated and related data-structures that ensure these defined requirements.

Consequently, detecting violations of device integrity is a viable approach to protect devices against different kind of well known attack vectors. This ranges from detecting malware like viruses, Trojan horses, worms, etc. up to the detection of more sophisticated attacks against very specific platforms like Stuxnet and Duqu.

However, while remote attestation provides a viable approach, currently used protocols and approaches do not scale well towards huge device deployments. With the emerging of always smaller communication devices, like sensors or IoT devices, applying common remote attestation protocol seems impracticable, due to the pure amount of data, necessary to be exchanged during the process and the computational effort introduced during the verification process.

Patent application US 20110010543 A1 discloses methods, components and apparatus for implementing platform validation and management (PVM). PVM provides the functionality and operations of a platform validation entity with remote management of devices by device management components and systems such as a home node-B management system or component. Example PVM operations bring devices into a secure target state before allowing connectivity and access to a core network.

Patent application US 20110035577 A1 discloses machine-readable media, methods, apparatus and system for enhanced digital right management framework. A server platform may receive a request of downloading content and first attestation information from a client platform. The server platform may examine if the client platform attests to a client platform characteristic that affects integrity of the client platform by using the attestation information, and then encrypt and download the content to the client platform if the client platform attests to the client platform characteristic. The server platform may further receive a request of viewing the content and second attestation information from the client platform. The server platform may then examine if the client platform attests to its integrity by using the second attestation information; and then send a content key to the client platform if the client platform attests to its integrity, so that the client platform can decrypt and view the content.

Patent application US 20120266209 A1 discloses a system of operating an electric power grid using common cyber security services to ensure secure connections from control systems to devices in the electric transmission, electric distribution, and energy centric devices in electric customers' networks.

SUMMARY

In view of this, embodiments of the present invention involve a device, servers, a system and methods to provide a more secure and efficient data attestation. The invention is disclosed in the appended claims.

According to a first aspect, the invention relates to a server for data attestation, comprising:
an interface for communication between the server and a device; and a processor configured to communicate with the device through the interface, wherein during the communication with the device, the processor is configured to:

> send an attestation request to the device; receive a first measurement report from the device;
> attest the first measurement report by determining whether the first measurement report fulfills a preset condition;
> create a digital certification if the first measurement report fulfills the preset condition; and send the digital certification to the device;
> wherein the processor is further configured to:

>> receive a second measurement report from the device, wherein the second measurement report includes the digital certification; and
>> attest whether the second measurement report fulfills a second preset condition based on the digital certification.

According to a second aspect, the invention relates to a device for data attestation, comprising:
an interface for communication between the device and a first server; a security module configured to generate a first estimated value, a processor adapted to generate a first measurement report based on the first estimated value; wherein during the communication between the device and the first server, the processor is further configured to:

> receive a first attestation request from the first server; send the first measurement report to the first server; and receive a digital certification from the first server, wherein the digital certification is created by the first server according to the first measurement report when the first server determined that the first measurement report fulfills a preset condition;

> wherein after receiving the digital certification, the processor (202) is further configured to:

>> generate a second measurement report based on the received digital certification; and

>> send the second measurement report to the first server or a second server for attestation.

According to a third aspect, the invention relates to a server for data attestation, comprising: an interface for communication between the server and a device; a processor configured to communicate with the device through the interface; wherein during the communication with the device, the processor is configured to: receive a measurement report from the device, wherein the measurement report is generated by the device according to a digital certification generated by another server, the digital certification being included in the measurement report; and attest whether the measurement report fulfills a preset condition according the digital certification.

According to a fourth aspect, the invention relates to a system for data attestation, includes a server according the first aspect above, a device according the second aspect above and/or the third aspect above.

According to a fifth aspect, the invention relates to a method for data attestation, including: sending, by a server, an attestation request to a device; receiving, by the server, a first measurement report from the device; attesting, by the server, the first measurement report by determining whether the first measurement report fulfills a preset condition; creating, by the server, a digital certification if the first measurement report fulfills the preset condition; and sending, by the server, the digital certification to the device;
wherein the method further includes:

> receiving a second measurement report from the device, wherein the second measurement report includes the digital certification; and

> attesting whether the second measurement report fulfills a second preset condition based on the digital certification.

According to a sixth aspect, the invention relates to a method for data attestation, including: receiving, by a device, a first attestation request from a server; sending, by the device, a first measurement report to the server; and receiving, by the device, a digital certificate from the server; wherein after receiving the digital certification, the method further includes:

generating a second measurement report based on the received digital certification; and

sending the second measurement report to the first server or a second server for attestation..

According to a seventh aspect, the invention relates to a method for data attestation, including:

receiving, by a server, a measurement report from a device, wherein the measurement report is generated by the device according to a digital certification generated by another server; and

attesting, by the server, whether the measurement report fulfills a preset condition according the digital certification.

BRIEF DESCRIPTION OF THE DRAWINGS

Figure la is a schematic system structure according to a system embodiment of the present invention;

Figure 1b is a schematic system structure according to a system embodiment of the present invention;

Figure 2a is schematic structure of a device according to a device embodiment of the present invention;

Figure 2b is a schematic structure of a TPM equipped Entity (TEE);

Figure 2c is a schematic structure of a Trusted platform module (TPM);

Figure 2d is schematic structure of a Trust Evaluation and Management System (TEAM);

Figure 2e is schematic structure of a server according to a server embodiment of the present invention;

Figure 3a is a schematic flowchart of data attestation performed by a TEE and a TEAM;

Figure 3b is a schematic flowchart of data attestation performed by a TEE and a TEAM;

Figure 3c is a schematic flowchart of data attestation performed by a TEE and another TEAM;

Figure 4 is a schematic flowchart of data attestation method performed by a device according to a first method embodiment of the present invention;

Figure 5 is a schematic flowchart of data attestation method performed by a first server according to second method embodiment of the present invention;

Figure 6 is a schematic flowchart of data attestation method performed by the device according to a third method embodiment of the present invention;

Figure 7 is a schematic flowchart of data attestation method according to a fourth embodiment of the present invention.

DESCRIPTION OF THE EMBODIMENTS

For convenience of illustration, abbreviations listed below may be used in the following embodiments of this invention as examples instead of limitations.

IMA     Integrity Measurement Architecture
IoT     Internet of Things
MAC     Message Authentication Code

PCR      Platform Configuration Registers
RVD      Reference Value Database
SML      Stored Measurement Log
SP       Signed PCR
SSR      system measurement report
TEAM     Trust Evaluation and Management Systems
TEE      TPM equipped Entities
TPM      Trusted Platform Module
TSC      Trusted State Certificate

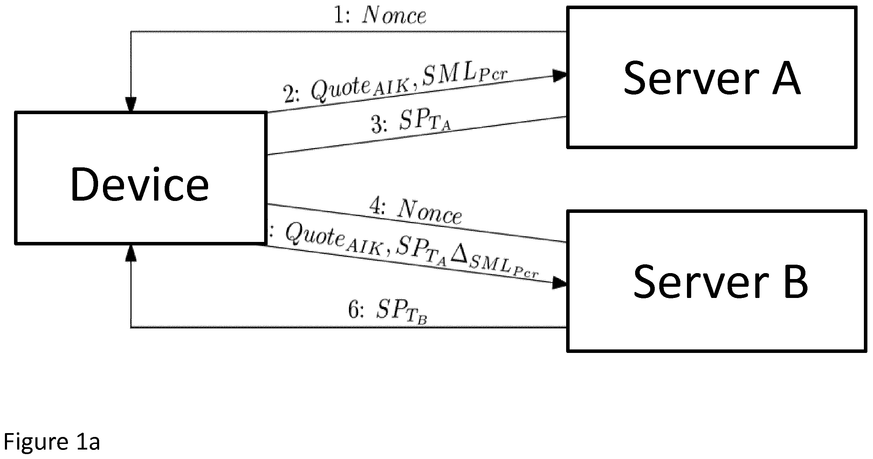

Figure 1a is schematic structure of data attestation system according to a system embodiment of the present invention.

As show in figure 1a, an example of a system according to a possible realization of the invention includes a device and a first server A. The state of the device is examined during an attestation process. When receiving an attestation from server A, the device sends a measurement report including measurement data to server A. Then server A attests the measurement report and decides whether the measurement report meets a preset condition. The preset condition may be that a signature in the measurement data report is verified and/or the integrity of the measurement data is verified. Verification can be performed according to methods known to the skilled person. If the measurement report meets the preset condition, server A generates a digital certification (digital certificate) and sends the digital certification back to the device. This attestation is a complete attestation which is performed based on all measured data. Any subsequent attestation (or re-attestation) process will benefit from the certification received by the device.

For example, during the subsequent attestation, the measurement data already attested by server A will not be attested again. Instead of sending previously attested measurement data again to the server A for re-attestation, the device will send to the server A the received digital certification. The previously attested data will be acknowledged by the server as already attested on the basis of the digital certification. In this manner, only changed measurement data needs to be sent and attested in a subsequent attestation.

Specifically, during the subsequent attestation (or re-attestation), the device sends a new measurement report carrying the digital certification and new measurement data to server A. The new measurement data does not include any measurement data from previous attestation processes that have already been attested. Then the server A attests the new report according to the digital certification and to new measurement data if any new measurement data is available. After attesting the digital certification and the new measurement data successfully, server A confirms the reliability of the device state even though it does not receive the all-inclusive measurement data (or the measurement data collected so far by the device).

The system may further include second server B which trusts the digital certification issued by server A. If server B wants to attest the state of the device, the device sends a measurement report carrying the digital certification and the changed measurement data to the server B. Then the server B can also decide whether the device state is reliable, in the same manner as described for the server A. Moreover, server B may not have the ability of verifying measurement data. In this case, the server just performs lightweight re-attestation during which server B only verifies a digital certification in a measurement report to decide whether the state represented by the measurement report is reliable in the same manner of attesting the digital certification as described above with reference to server A.

Server B and server A may be in or belong to a same network or different networks. For example, both servers A and B may belong to a same company. Or servers A and B may respectively belong to different companies. Server B and server A may provide same service or different services.

Server A or B may utilize a key to verify the digital certification. The key can be shared by servers A and B at any point in time and over public communication channels. Any type of key or authentication method can be used to perform verification of the digital certification. As an example, authentication may be performed based on a public, a pre-shared, or agreed symmetric key.

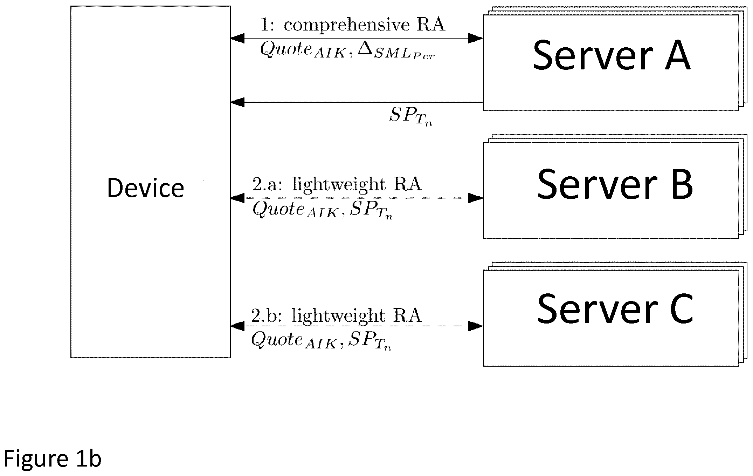

Figure 1b is another schematic structure of a data attestation system according to a system embodiment of the present invention. In this system, server A has the ability to perform a complete or full attestation like the attestation described above with reference to server A in figure 1a. Servers B-C do not have such ability and can only perform lightweight re-attestation. Servers A-C may be in or belong to a same network or different networks.

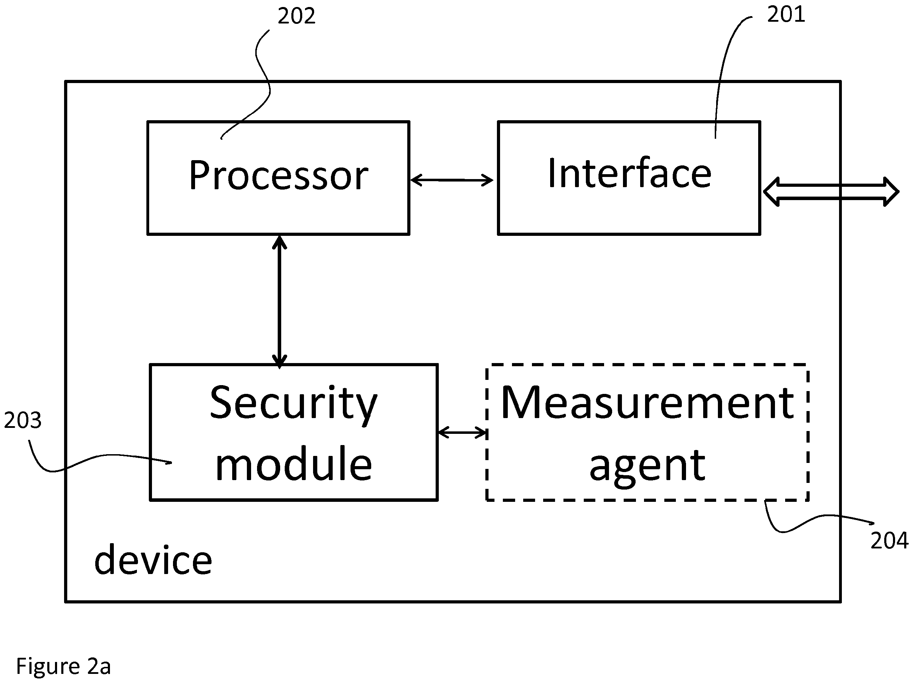

Figure 2a is schematic structure of a device according to a device embodiment of the presented invention.

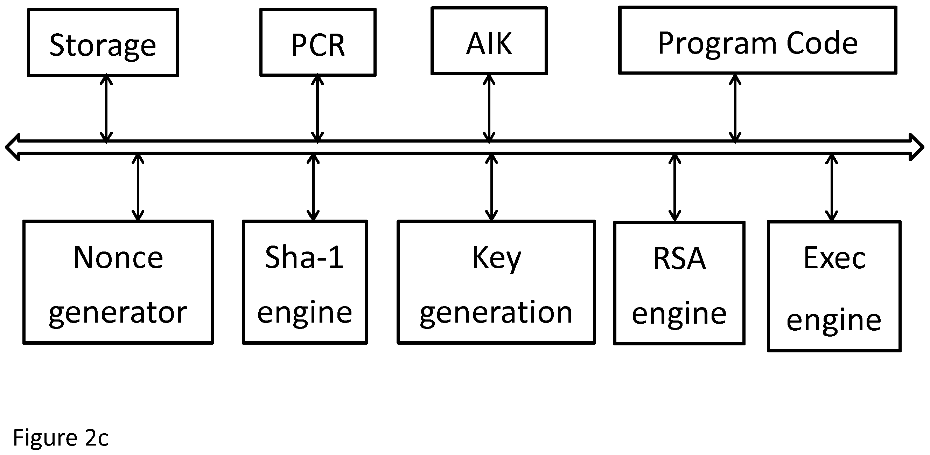

The device in this embodiment is an example of the device, which can be used in the system of figures 1a-1b. As shown in figure 2a, the device includes a processor 202, a measurement agent 204, a security module 203, and an interface 201. The measurement agent 204 is responsible to measure the applications on the device to obtain measurement data relevant to the device state. This component is optional and its function may also be carried out by a different entity, such as by the processor. The security module 203 may be implemented as a coprocessor (security coprocessor). Alternatively the security module may be implemented as a software unit. The security module 203 is in charge of measurement data accumulation which is described below with figure 2c. The processor 202 is in charge of generation of measurement reports for the device based on the measured data. The device, for example the processor 202, communicates with a server through the interface 201.

An example of the device in figure 2a is a TPM equipped Entity (TEE). Typically, a TEE includes an operating system (OS), a Trusted Platform Module (TPM) 213 and a processor 202. The processor may be the same processor described with reference to the device of figure 2a. The OS comprises a Kernel Module named Integrity Measurement Architecture (IMA) 214. Correspondingly, the TPM and the IMA are respective examples of the measurement agent and the security coprocessor in figure 2a.

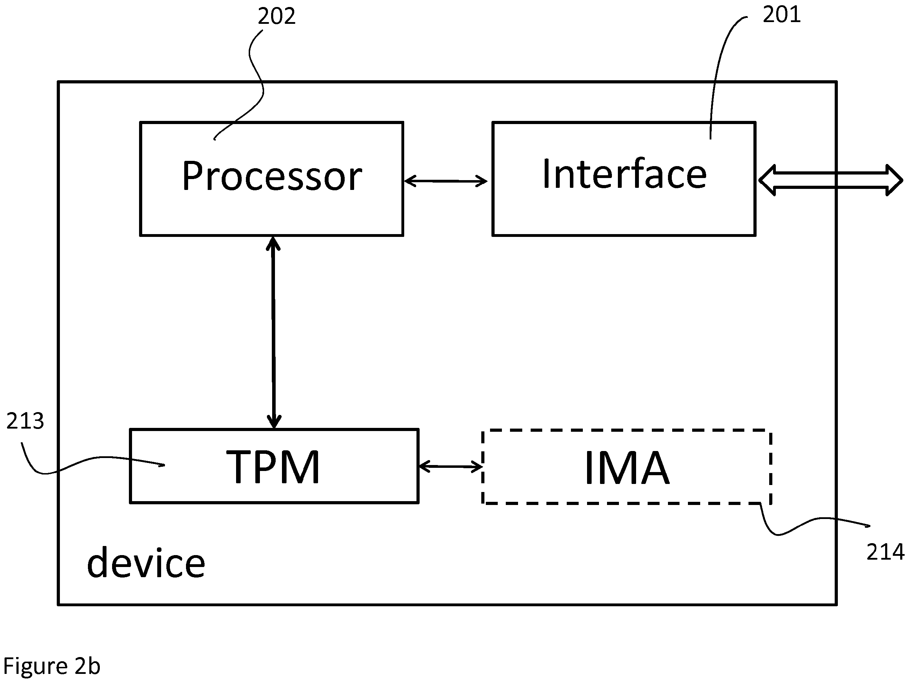

Figure 2b shows a general structure of the TEE.

The IMA 214 performs measurements of the device state. For example, a loading process of applications involves mapping files into device memory before their execution. The IMA observes this loading process and measures involved files before they are finally mapped into assigned memory areas. When performing said observation, the IMA gathers information from all accessed files to obtain measurement data. The processor 202 is in charge of generating a measurement report of the device according to the measurement data obtained by the IMA.

Figure 2c shows an example of a possible architecture of the security module of figure 2a or of the TPM of figure 2b. In the following description of figure 2c reference will be made to the TPM of figure 2b. However it will be clear that figure 2c and the components described therein can also be applied to the more general structure of the security module 203 as described in figure 2a. The TPM 213 or the security module 203 comprises a tamper-resistant hardware or is software-virtualized. Inside the TPM, there are some registers, namely Platform Configuration Registers (PCRs). The TPM uses the measurement data obtained by IMA or by the measurement agent to generate an estimated value, SP, which is regarded to represent the current system state. The estimated value may be a digest (or abstract) of the measurement data. A digest or abstract of certain data may be calculated by a function, such as Hash. The estimated value is (i) stored in a designated register, such as a PCR register in the TPM, and (ii) appended to a Stored Measurement Log (SML) which includes the measurement data. The SML may optionally include a list with detailed information about how the measurement data are calculated. The estimated value may also be called measured PCR value.

The estimated value is maintained by the IMA or by the measurement agent kernel module. During the measure process, the IMA kernel module uses sophisticated mechanisms in order to recognize the estimated value already measured and acknowledged values. Once measurement data is successfully acknowledged and thus its estimated value added to the PCR and the SML, it will only be re-measured and appended to the SML when its content changed, either by malicious behavior or during an update.

When an attestation request sent from a server is received by the device, the processor 202 generates a measurement report (e.g. a System State Report, SSR) and sends the measurement report to the server. The measurement report may be generated by the device based on an estimated value generated by the security module 203 or TPM 213, such as the estimated value described in the previous paragraphs. In an implementation, the measurement report may comprise a device digital signature (i.e. Quote) generated by the security module 203 or TPM 213. The device signature is generated by the device according to the estimated value of the measurement data. The estimated value may also be called measured PCR value.

In short, according to an implementation of the device of the invention, the interface 201 is configured for communication between the device and a first server. The first server may be, for instance, one of the servers described in connection with figure 1. The security module 203 generates a first estimated value as described, for instance in the previous paragraphs. The processor 202 generates a first measurement report, which may be for instance a first SSR (SSR1), based on the first estimated value (e.g.SP1).

During the communication between the device and a server, the processor 202 of the device receives a first attestation request from the first server. The first attestation request may be for instance a nonce. In the context of this disclosure, receiving, by the processor, an attestation request and/or a digital certification and more generally any data has to be interpreted broadly. This encompasses receiving the attestation request and/or digital certification directly or retrieving from the interface or from a memory of the device (not shown in the figures) the attestation request and/or digital certification, which have been previously received by the interface 201. The first measurement report (e.g. SSR 1) is then sent to the first server and the digital certification (e.g. TSC) is received from the first server. The digital certification is created by the first server according to the first measurement report (e.g. SSR1) when the first server determined that the first measurement report (e.g. SSR1) fulfills a preset condition. As described above, the preset condition may be that a signature included in the measurement data report is verified and/or the integrity of the measurement data is verified.

After receiving the digital certification (e.g. TSC), the processor 202 is further configured to generate a second measurement report (e.g. SSR 2) based on the received digital certification (e.g. TSC) and send the second measurement report (e.g. SSR 2) to the first server or a second server for attestation.

The received digital certification (e.g. TSC) mentioned above may include a server digital signature (e.g. SPT). The second measurement report (e.g. SSR 2) mentioned above may include a device digital signature (e.g. Quote2) including the server digital signature (e.g. SPT).

The security module is further configured to generate a second estimated value (e.g. SP2). In this case the device digital signature (e.g. Quote2) may further include the second estimated value (e.g. SP2).

The first measurement report (e.g. SSR1) may further include a first measurement data (e.g. SML1). The second measurement report (e.g. SSR2) further includes a difference measurement data between the first measurement data (e.g. SML1) and a second measurement data (e.g. SML2), wherein the first measurement data (e.g. SML1) is a subset of the second measurement data (e.g. SML2).

The processor 202 may further be configured to calculate the difference between the first measurement data (e.g. SML1) and the second measurement data (e.g. SML2) by (i) extracting the a first estimated value (e.g. SP) from the digital certification (e.g. TSC); (ii) calculating intermediate estimated values (e.g. ISP), based on the second measurement data (e.g. SML2); (iii) comparing the intermediate estimated values (e.g. ISP) against the extracted first estimated value (e.g. SP1) to determine one or more entries in the second measurement data corresponding to additional measurements not included in the first measurement data; and (iv) generating the difference measurement data. The difference measurement data includes the one or more determined entries.

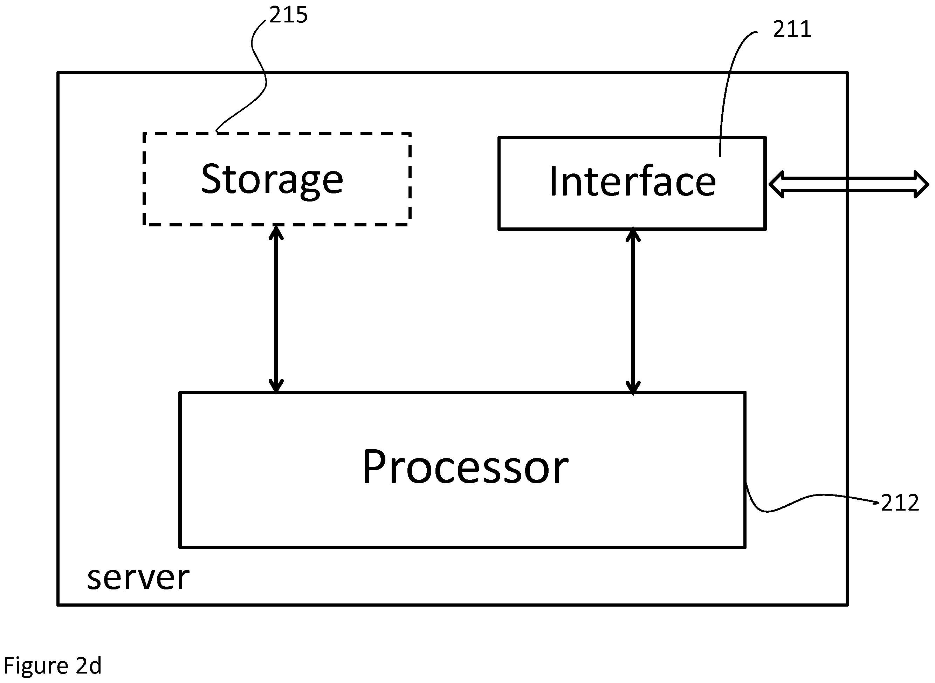

Figure 2d depicts a schematic structure of a server according to an embodiment of the present invention.

The server in this embodiment is an example of server A in figure 1. As shown in figure 2d, the server includes a processor 212, a storage 215 and an interface 211. The storage 213 stores custom-tailored database containing reference values of reliable software and files. The storage 213 may be inside or outside the server as long as it is accessible to the server. Through the interface 211, the server can communicate with a device (for example the device of figure 2a or the TEE described with reference to figure 2b) and can send to the device a request for initiating an attestation process. The server, for instance the processor 212, receives a measurement report sent from the device, and attests the measurement report. For instance, the processor analyzes the measurement report and determines whether the device is in a reliable state.

Typically, when receiving a measurement report from the device, the server accesses a custom-tailored database to compare all measurement data included in the measurement report with the reference values. If all the individual measurement data is equal to the designated reference values, the server determines that the device only executed and loaded files known to the server and thus can be considered as compliant.

Then the server generates a digital certification and sends it back to the device. The digital certification may be prepared and sent according to several methods as it will be described in more detail below.

In addition, the server may initiate a subsequent attestation. The subsequent attestation comprises receiving a new measurement report including the digital certification, and attest the new measurement report according to the digital certification.

An example of the server in figure 2d may be a Trust Evaluation and Management System (TEAM).

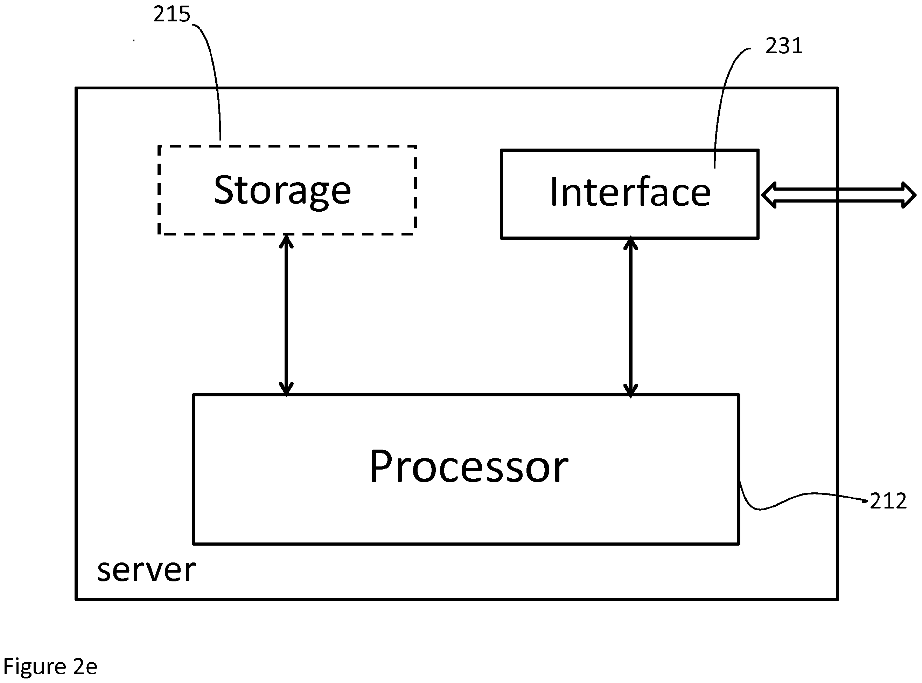

Figure 2e is schematic structure of a server according to a second embodiment of the present invention.

The server in this embodiment is an example of server B in figure 1. The server comprises an interface 211 for communication with a device, which may be a device according to figure 2a or 2b. The server includes a processor 212 configured to communicate with the device through the interface 211. Through the interface, this server may initiate a subsequent attestation by sending an attestation request to the device, such as the device of figure 2a or the TEE of figure 2b. Server B receives measurement report from the device. This measurement report is a new or subsequent measurement report compared to that received by server A and includes the digital certification. The processor 212 attests the new measurement report according to the digital certification to determine whether the device is in a reliable state. In other words the processor 212 attest whether the measurement report fulfills a second preset condition according the digital certification. The preset condition may be that t a signature included in the measurement data report is verified and/or the integrity of the measurement data is verified. In this case, the processor may verify the digital certification included in the new measurement report. The new measurement report may be different than the measurement report received by server A and used to generate the digital certification.

The difference between the servers in figure 2d-2e is that the latter server can be applied in a specific situation where the measurement report does not include measurement data (SML) and thus the server only needs to verify the digital certification (TSC) and device digital signature (Quote) included in the measurement report. This may be for instance the case if server B belongs to a different company or to a different network than server A. In this case, server B may not be entitled to perform attestation on measurement data, which can only be attested by servers in the network or company of server A and may only be limited to perform attestation of a digital certification generated by the server A.

Alternatively, the server B may include all the functionalities of server A, as described above.

In short, according to a server embodiment of this invention the interface 211 is for communication between the server and a device. The processor 212 is configured to communicate with the device through the interface 211. During the communication with the device, the processor is configured to send an attestation request to the device. The processor is further configured to receive a first measurement report (e.g. SSR1) from the device and attest the first measurement report (e.g. SSR1) by determining whether the first measurement report (e.g. SSR1) fulfills the preset condition. The preset condition may be the same as described above. The processor 212 creates a digital certification (e.g. TSC) if the first measurement report (e.g. SSR1) fulfills the preset condition and sends the digital certification (e.g. TSC) to the device. In this embodiment, the server sends the digital certification to the device and therefore the server does not need to store any data for subsequent attestation about the device. So the risk of data leak on the server is avoided and thus the data is safer.

The processor is configured to create the digital certification (e.g. TSC) by generating a server digital signature (e.g. SPT) based on a first estimated value (e.g. SP1) included in the first measurement report (e.g. SSR1). The first estimated value may be generated as described above with reference to figure 1. Since the digital certification (e.g. TSC) is generated by the server according to the first estimated value (e.g. SP1) included in the first measurement report (e.g. SSR1), the digital certification can be used as a proof of a successful verification made by the server and thus can be sent to any server trusting this digital certification to avoid repeated attestation of the measurement data already attested by the server issued the digital certification. So the certification enables subsequent attestation processes to be performed faster. This advantage is applied to all embodiments/examples including such digital certification (e.g. TSC).

In addition, the processor may configured to generate the server digital signature (e.g. SPT) according to the first estimated value (e.g. SP) included in the first measurement report (e.g. SSR) by: (i) calculating a secure compression of the first estimated value (e.g. SP); and (ii) encrypting the calculated secure compression (e.g. hash of SP) with a key to generate the server digital signature (e.g. SPT). The secure compression may be a hash. In this implementation, the server digital signature is generated in a secure way and thus the risk of data leak or being maliciously amended is avoided. This advantage is applied to all embodiments/examples including such server digital signature.

In a further development, which may be implemented in the server of the invention in addition or in alternative to the previous implementations, the processor 212 is configured to generate the digital certification (e.g. TSC) by encapsulating the first estimated value (e.g. SP1) and the server digital signature (e.g. SPT). Since the first estimated value was encapsulated in the digital certification, a server receiving the digital certification can identify the measurement data already attested and will not repeatedly attest such measurement data. Therefore the digital certification enables a subsequent attestation be performed faster. This advantage is applied to all embodiments/examples including such digital certification.

In still a further implementation, the processor may be additionally or as an alternative further configured to: (i) receive a second measurement report (e.g. SSR 2) from the device, wherein the second measurement report (e.g. SSR2) includes the digital certification (e.g. TSC); and (ii) attest whether the second measurement report (e.g. SSR 2) fulfills a second preset condition based on the digital certification (e.g. TSC). An example of second preset condition has already been defined above and will not be discussed further. So the server can successfully verify the digital certification included in the second measurement report and thus does not need to attest the measurement data already been attested. Therefore the certification makes it possible that the data sent to the server is reduced and subsequent attestation is faster.

Optionally, a server according to an embodiment of this invention comprises the interface 211 for communication between the server and a device and a processor 212, configured to communicate with the device through the interface 211. During the communication with the device, the processor is configured to receive a measurement report (e.g. SSR 2) from the device, wherein the measurement report (e.g. SSR2) is generated by the device according to a digital certification (e.g. TSC), the digital certification being included in the measurement report (e.g. SSR2). The processor 212 attests whether the measurement report (e.g. SSR 2) fulfills a preset condition according the digital certification (e.g. TSC). So any server that can successfully verify the digital certification included in the second measurement report does not need to attest the measurement data already been attested. Thus the certification makes it possible that the data sent to the re-attestation server is reduced and subsequent attestation is faster. This advantage is applied to all embodiments/examples including such measurement report including a digital certification.

The received digital certification (e.g. TSC) includes a server digital signature (e.g. SPT). The measurement report (e.g. SSR 2) includes a device digital signature (e.g. Quote2) including the server digital signature (e.g. SPT).

The processor is further configured to attest the second measurement report (e.g. SSR2) by verifying the device digital signature (e.g. Quote2).

The device digital signature (e.g. quote2) further comprises a second estimated value (e.g. SP2) and the server digital signature (e.g. SPT); wherein the processor is configured to verify the device digital signature (e.g. Quote2) by decrypting the device digital signature (e.g. Quote2) with a key to extract the second estimated value (e.g. SP2) and the digital signature (e.g. SPT).

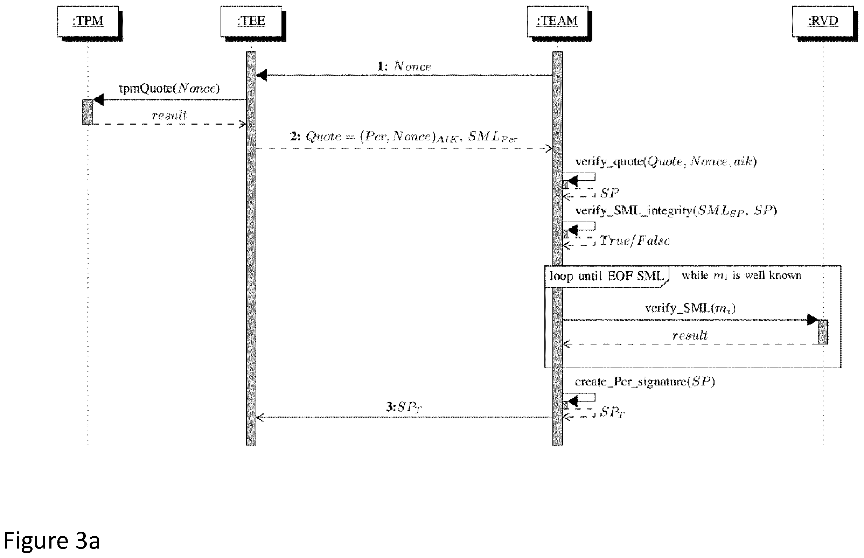

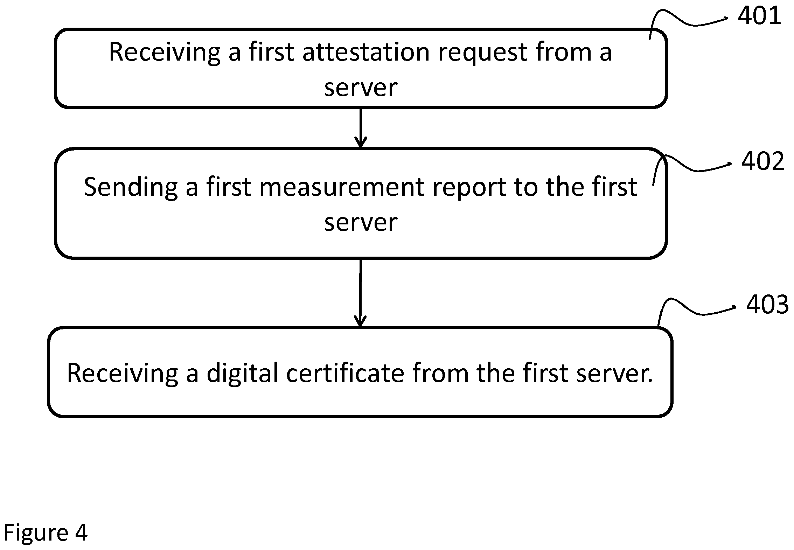

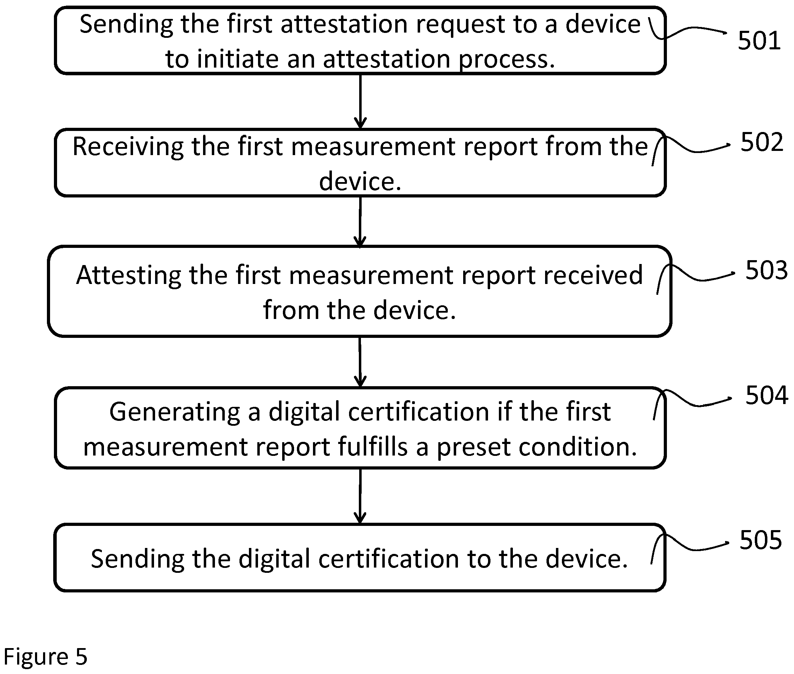

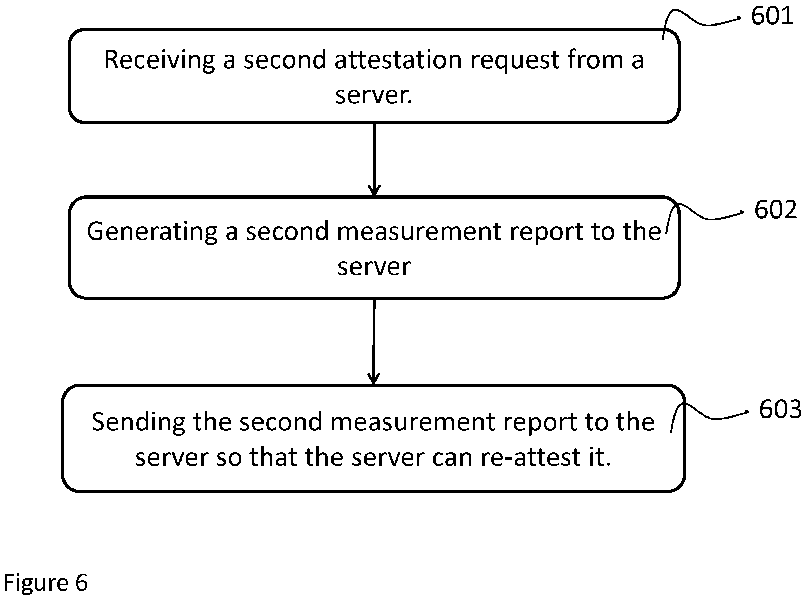

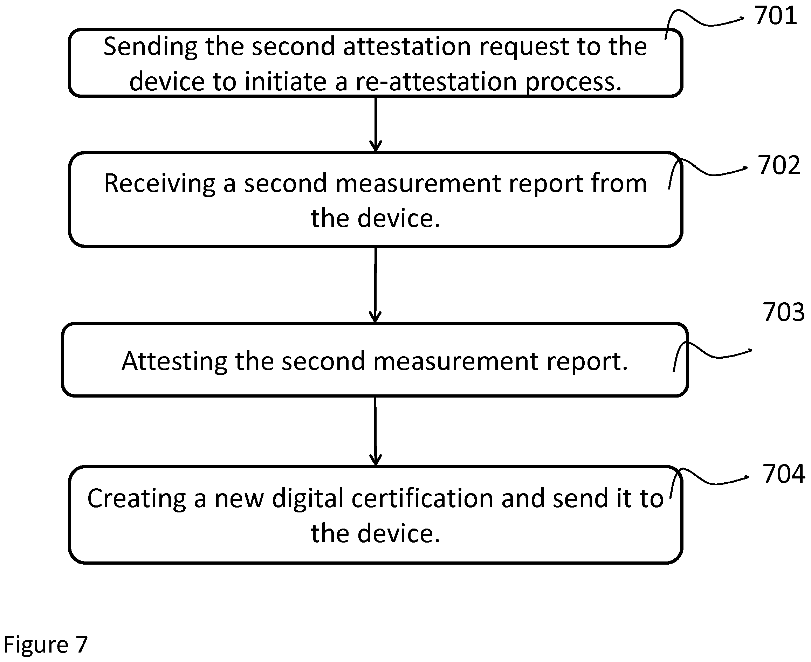

Figure 3a is a schematic flowchart of data attestation performed by the device of figure 2a or more specifically by the TEE of figure 2b and the server of figures 2d and 2e. Figure 3a is an example of a method that can be carried out according to the first and second embodiment. Again, in the following description the TEE and TPM as well as TEAM will be explicitly mentioned, but it will be clear that the described steps can also be performed by the device, the security module and the server described with reference to figures 2a, 2d, 2e. The TPM is part of the TEE. The RVD indicates a reference value database which may be inside or outside the TEAM. The steps performed by the TEE in the configuration of figure 3a will be described in a more detailed manner with reference to the description of figures 4 and 6. Likewise, the steps performed by the TEAM in the configuration of figure 3a will be described in a more detailed manner with reference to the description of figures 5 and 7.

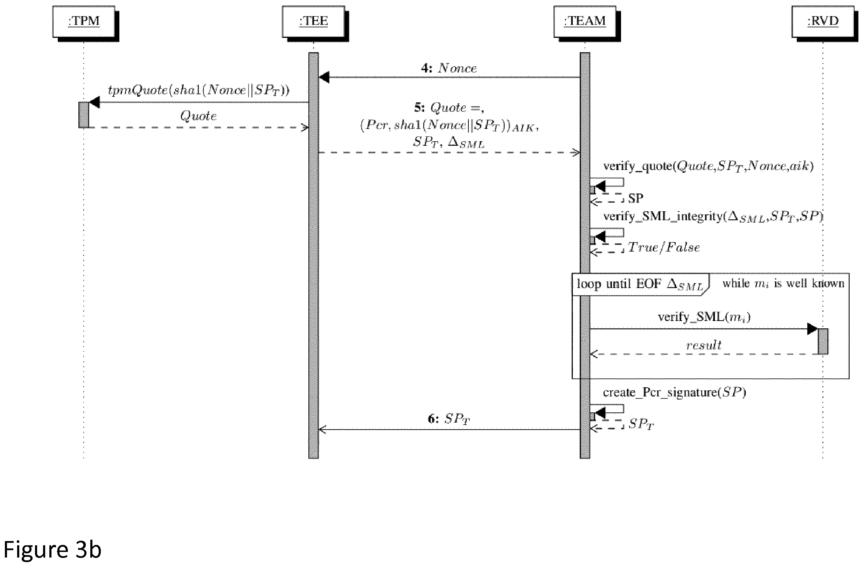

Figure 3b is a schematic flowchart of data attestation performed by a TEE and a TEAM. Figure 3b is an example of the third and fourth methods described in the following. The TEAM may be the same as or different from the TEAM in figure 3a. The TPM is part of the TEE. The RVD is a reference value database which may be inside or outside the TEAM. The steps performed by the TEE in the configuration of figure 3b will be described in a more detailed manner with reference to the description of figures 4 and 6. Likewise, the steps performed by the TEAM in the configuration of figure 3b will be described in a more detailed manner with reference to the description of figures 5 and 7.

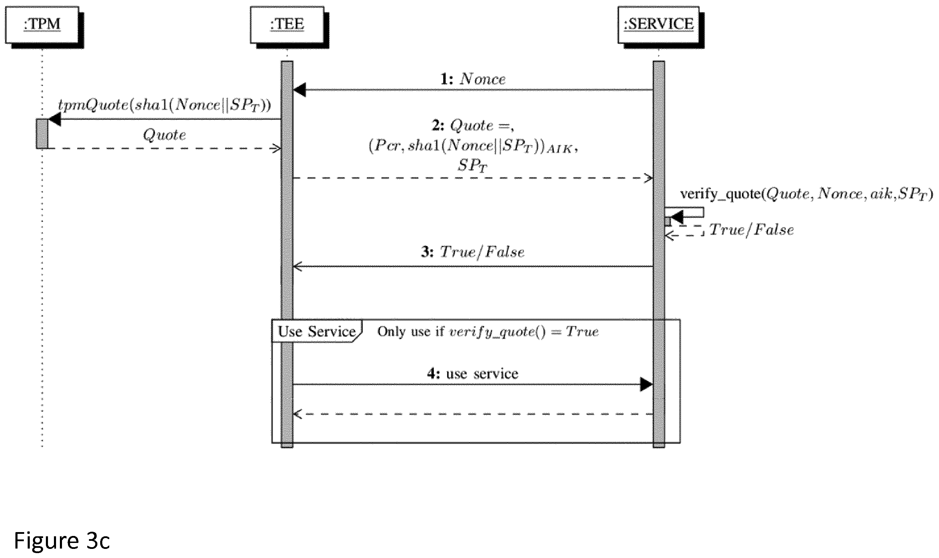

Figure 3c is a schematic flowchart of data attestation performed by a TEE and TEAM B (shown as "service"). Figure 3c is another example of the third and fourth methods described in the following. The TEAM B provides a service (i.e. a software fulfilling a certain purpose) and does not have an RVD. The TPM is part of the TEE.. The steps performed by the TEE in the configuration of figure 3c will be described in a more detailed manner with reference to the description of figures 4 and 6. Likewise, the steps performed by the TEAM in the configuration of figure 3c will be described in a more detailed manner with reference to the description of figures 5 and 7.

Figure 4 is a schematic flowchart of data attestation method performed by a device according to a first method embodiment of the present invention. The device performing the method may be the device described in figure 1. This method may be performed by a device (e.g. TEE) in the previously mentioned system embodiment and device embodiment through its interface. As shown in figure 4, the method includes:

401: Receiving a first attestation request from a first server.

As an optional implementation manner, the first attestation request includes a first arbitrary number. The arbitrary number may further be an unpredictable random number, gathered from a Random Number Generator (RNG). The first arbitrary number is valid only during one attestation. In other words, arbitrary numbers in different attestations must be different. According to an alternative implementation, the first arbitrary number may be a *Nonce.* The first arbitrary number will be sent back from the device to the first server, as part of the digital certificate. The first arbitrary number, may be verified by the first server in order to avoid replay attacks.

402. Sending a first measurement report to the first server.

After receiving the first attestation request from the first server, the processor 202 of the device generates a first measurement report for attestation. The first measurement report may be generated based on a first measurement data.

The first measurement report may include a first estimated value of the first measurement data. The first estimated value may be a HASH of the first measurement data. The estimated value may be included as a first device digital signature (e.g. Quote) in the first measurement report. The security module or coprocessor (e.g. TPM) of the device generates the first device digital signature by encrypting the first estimated value. Encryption of the first estimated value may be done using for instance a public key (e.g. AIK). The first estimated value is stored in PCR and thus is also called PCR value.

If the first attestation request includes the first arbitrary number, the first device digital signature will be generated by encrypting the first estimated value and the first arbitrary number. As an example, the first device digital signature may be generated via the function (1) below:

$$\text{Quote} = (\text{Pcr}, \text{Nonce})_{\text{AIK}} \qquad (1)$$

A PCR value included in the first device digital signature (e.g. Quote) is regarded as being signed by the device and thus is also called signed PCR value (SP). So the first estimated value included in the first measurement report is also called SP1.

Storing the first estimated value inside the TPM PCR register is done via a specific extend functionality. By applying this functionality it is possible to measure an unlimited amount of measurement data. In particular the extend function for two consecutive measurement values $m_i$ and $m_{i+1}$, is provided by the following function:

$$Pcr_{m_i} := hash(Pcr_{m_{i-1}} \| m_i) \qquad (2a)$$

$$Pcr_{m_{i+1}} := hash(Pcr_{m_i} \| m_{i+1}) \qquad (2b)$$

Due to sequential nature of the extend functionality, PCR values are most likely to vary for every boot, unless a strict sequential boot process was applied. A hash function is utilized in the extend functionality. According to an implementation, the security module makes use of sha1 as a hash algorithm (this is for instance the actual implementation of TPM 1.2). Clearly, other implementations of the security module, such as future TPM Specification line TPM 2.0) and higher, may use different hash functions.

The first measurement report may also include a first measurement data (e.g. SML) which is also maintained by the IMA Kernel module and contains all necessary information which may be used by the first server to attest whether the device is in a trustworthy state or not. In particular, the first measurement data contains all measured files and are called template value $m_i$. The template value $m_i$ provides integrity protection for each row of the first measurement data.

403: Receiving a digital certificate from the first server.

The digital certificate is generated by the first server, after the first server attests the first measurement report and determines that the first measurement report meets a first preset condition. The first digital certificate is generated according to information in the first measurement report. The process of attesting the first measurement report and generating digital certification is described in following third method described with reference to figure 6.

Steps 401-403 are about a complete attestation to the state of the device. After that, another attestation (also called re-attestation or subsequent attestation) to the state of the device may be initiated by the server issued the digital certification or other server which trusts or accepts the digital certification.

In this embodiment, the device receives a digital certificate generated by a server. Therefore the device stores the certification and the server does not need to store any data for subsequent attestation about the device. So the risk of data leak on the server is avoided and thus the data is safer.

Moreover, during a subsequent attestation, the device is able to send the digital certification to other sever or the server that issued the certification as proof of reliability of the device state. Neither of the servers needs to attest the measurement data already attested if it successfully verifies the certification, given the device state remained the same. Thus the device receiving the certification enables subsequent attestation processes to be performed faster.

Figure 5 is a schematic flowchart of data attestation method performed by a first server according to a second method embodiment of the present invention. The server in this embodiment performs a complete attestation, issues a digital certification if the attestation is successful, and sends the digital certification back to the device. The digital certification may be used in a subsequent attestation performed by this server or other server. The method in this embodiment may be performed by the server of figure 2d. As shown in figure 5, the method includes:

501: Sending the first attestation request to a device to initiate an attestation process.

The first attestation request is received by the device in previous first method embodiment.

Optionally, the attestation request includes a first arbitrary random number (e.g. Nonce) to avoid replay attack.

502: Receiving the first measurement report from the device.

Details of the first measurement report have been described in step 402 of previous first method embodiment.

503: Attesting the first measurement report received from the device.

As described in step 402, the first measurement report may include the first device digital signature (e.g. Quote) and the first measurement data (e.g. SML). The first device digital signature may be generated according to the first estimated value of the first measurement data. Attestation of the first measurement report may include determining that the first measurement report fulfills a preset condition. The preset condition may be that a signature included in the measurement data report is verified and/or the integrity of the measurement data is verified. Accordingly, the verification process to the first measurement report may include:

(i): Verifying the first device digital signature.
The first server verifies the first device digital signature with a first public key (e.g. AIK key). If the verification is successful, the first estimated value (e.g. SP1) is extracted (also called first extracted estimated value). Methods for performing the verification are known to the skilled person. The Attestation Identity Key (AIK) is a public/private key pair. AIK is signed by a trusted third party. The device has both keys while the server has only public key.
If the first device digital signature further includes the first arbitrary number, the first arbitrary number is also extracted. As described in the first method embodiment, the first server generates and has knowledge of the first arbitrary number. Consequently, if the extracted arbitrary number is equal to the one that the first server generated and sent to the device, the first server determines that this attestation is the one initiated by itself. Otherwise, the attestation will be ended. Therefore, a replay attack can be avoided.

(ii): Verifying the first measurement data.

The first measurement data (e.g. SML) is verified by calculating a first calculated value (also named calculated PCR value or CP) and comparing it with the extracted estimated value (e.g. SP) obtained in step503(i).

The first CP is calculated according to a first starting value and arbitrary intermediate template values (mi) specified in the first measurement data (e.g. SML).

In order to verify the correctness and integrity of the first measurement data (e.g. SML), the first CP is computed by simulating the PCR extended functionality as described in functions (2a)-(2b). If the first CP equals the first extracted estimated value (SP), the first measurement data (e.g. SML) was not altered.

An example of the computation process is shown in Table 1.

Table 1

| CP | Template Value ($m_i$) | Filename |
|---|---|---|
| Start Value: | | |
| 0000000000000000000000000000000000000000 | | |
| d92e7c344f84b5d192d57baba89f6e399980c85b | 1856d531548655b76d35105c318b2d7eaa0e35f2 | boot_aggregate |
| 7725dd11391eb230fdd3468895c9c5 ed052c8bde8 | ef411bae164fd624ea94fc9ef82f892 c82d78dcd | /init |
| 8835a44fa603e0f50bbe96df0dc524 4db0f5f0eec | bd32e452e14f84eb22d6ac9e9e1c61 eeac3cd7a4 | /bin/sh |
| 3ca003b89aaf977a8654f205e9483 e5d8c537bad | eefd4a6bebd6b001ff587c2335a3dd 03535d5a17 | /lib/ld-linux.so.2 |
| bf24d17301b89eaa485ed6c7a5be1 b33df529df4 | cd7c653f0a6691c0d723393bc732d e2b4a953eec | /etc/ld.so.cache |
| Expected Result from SP: | | |
| bf24d17301b89eaa485ed6c7a5be1 b33df529df4 | | |

The starting value "0000000000000000000000000000000000000000" reflects the initialized content of the related PCR (e.g. PCR # 10) and represents $Per_{m_i}$ in functions (2a)-(2b). Now, for each line of Table 1, functions (2a)-(2b) are repeatedly applied to obtain the following results:

**d92e7c344f84b5d192d57baba89f6e399980c85b=** sha1(0000000000000000000000000000000000000000‖
1856d531548655b76d35105c318b2d7eaa0e35f2

**7725dd11391eb230fdd346895c9c5ed052c8bde8=** sha1(d92e7c344f84b5d192d57baba89f6e399980c85b‖
ef411bae164fd624ea94fc9ef82f892c82d78dcd

**bf24d17301b89eaa485ed6c7a5be1b33df529df4=** sha1(3ca003b89aaf977a8654f205e9483e5d8c537bad‖
cd7c653f0a6691c0d723393bc732de2b4a953eec

The results of each individual computation can be found in Column CP of Table 1. The computations need to be in exact order and can only be computed sequentially, as each computation for $CP_i$ is based on the preceding intermediate$CP_{i-1}$.

504: Generating a digital certification if the first measurement report fulfills the preset condition.

If the verification in step 503 is successful, the first measurement report fulfills the preset condition.

The digital certificate may be a Trusted State Certificate (TSC) generated based on the first extracted estimated value obtained in step 503(i). The process of generating the digital certification may include steps i-iii listed below.

(i): Performing secure compression of the first extracted estimated value (e.g. SP1). Secure compression may be performed by calculating a hash of the first extracted estimated value. Alternatively, mapping may be performed by using a MAC (Message Authentication Code). In this case both the device and the server share a symmetric key.

(ii): encrypting the calculated hash with a key to generate a digital server signature. Encryption may be performed by using a private key. Alternatively, symmetric cryptography may be used if the device and the server share a symmetric key.

(iii): obtaining a digital certification by encapsulating both of the first extracted estimated value (e.g. SP1) and the server digital signature.

505: Sending the digital certification to the device.

The digital certification (e.g. TSC) can be used during a subsequent attestation (also named re-attestation) initiated by the first server or other server.

Although the estimated value in the digital certification (e.g. TSC) is regarded as a representative value for the current system state, it has to be mentioned that other information may also be part of the digital certification (e.g. TSC). For example, time, usage-counter, time-based validity information, ACLs or any other information. Any one of the listed information should be considered optional but not mandatory to the invention.

In this embodiment, the first server sends a digital certificate to the device, which causes several technical effects.

Firstly, the server does not need to store any data for subsequent attestation and thus not only storage space of the server is saved but also the risk of data leak on the first server is avoided.

Secondly, the digital certification can be sent from the device to other sever besides the server issued the certification. So any server that can successfully verify the certification does not need to attest the measurement data already been attested. Thus the certification makes it possible that the data sent to the re-attestation server is reduced and subsequent attestation is faster.

Figure 6 is a schematic flowchart of data attestation method performed by the device according to a third method embodiment of the present invention. The device is the one described in the first method embodiment. As shown in figure 6, the method of this embodiment includes:

601: Receiving a second attestation request from a server.

The second attestation is received after the device receives the digital certification and therefore may also be called re-attestation request. The second attestation request may be sent by the first server or a second server different from the first server.

Similar to the attestation in the previous first and second method embodiments, the attestation request in this embodiment may also include a second arbitrary number to avoid replay attack.

602: Generating a second measurement report (e.g. SSR2).

In step 403 of the first method embodiment, the device received a digital certification (e.g. TSC) from the first server. In step 602, the device generates a second measurement report based on the received digital certification. For example, the digital certification includes an estimated value $SP_T$ (namely the first estimated value SP1 extracted from the first measurement report) and thus the device extracts the estimated value from the certificate to generate the second measurement report. The extraction of $SP_T$ may be done with a private key or any other key that can decrypt the $SP_T$.

The second measurement report may include a second device digital signature and a delta measurement data that are described below.

(A) The second device digital signature

If the received digital certification includes the estimated value ($SP_T$), the device abstracts the estimated value ($SP_T$) and generates a second device digital signature (e.g. Quote) calculated based on the $SP_T$.

Alternatively, if the device generates a second estimated value based on current measurement data, the second device digital signature is calculated according to the second estimated value and the extracted estimated value ($SP_T$) above.

For example, the second device digital signature may be generated according to the function (3) below.

$$Quote = (Pcr, function(Nonce, SP_T))_{AIK} \qquad (3)$$

According to function (3), the second device digital signature (e.g. Quote) is generated by encrypting the second estimated value (also called current PCR value), the second arbitrary external data received from the server and the first estimated value $SP_T$ extracted from the TSC.

A function may be applied to both second arbitrary external data and $SP_T$ in order to encapsulate the data in one argument. For external data it is meant data which is not part of the security module or TPM. For example, function may be a hash function, a concatenation, any other function able to encapsulate the data or a combination of the aforementioned methods. In the case that the used function applies a secure compression function (i.e. hash), this means the concrete value of $SP_T$ gets lost during the compression, the first estimated value $SP_T$ is added to the second measurement report (e.g. SSR2) for any subsequent attestation requests onward. The first estimated value $SP_T$ may be appended to a delta measurement data described below. The first estimated value $SP_T$ may optionally be included in the digital certification which may be comprised in the second measurement report.

The encryption above may be also done by the TPM. The encryption may be a RSA Encryption executed with the private part of the AIK.

(B) Delta measurement data

In the first method embodiment described in figure 4, the first measurement data (e.g. first SML or SML1) in the first measurement report (e.g. SSR1) are attested by the first server. In this embodiment, the device performs state measurement again to obtain a second or current measurement data (SML2). The current measurement data will include the first measurement data and one or more additional measurement data. However, the device includes the changed data (additional measurement data) without the first measurement data in the second measurement report (SSR2). The changed data reflects the difference between the first measurement data (SML1) and the second measurement data (SML2). Thus, the first measurement data is a subset of the second measurement data.

As mentioned above, the device extracts the first estimated value ($SP_T$) from the digital certification (TSC). Therefore, the difference (delta SML or $\Delta_{SML}$) between the first measurement data (SML1) and the second measurement data (SML2) may be calculated by comparing the extracted first estimated value ($SP_T$) with intermediate Calculated PCR values $CP_i$ estimated to find a starting point of the difference in the second measurement data (SML2) or in other words to find the entry in second measurement data corresponding to the first additional measurement data. Specifically, the intermediate estimated values (ISP) are compared against the extracted first estimated value ($SP_T$) to determine one or more entries in the second measurement data corresponding to additional measurements not included in the first measurement data. Subsequently, the difference measurement data is generated, wherein the difference measurement data includes the one or more determined entries.

Concretely, the device iterates over the SML2 and calculates $CP_i$ computed by simulating the PCR extended functionality as described in functions (2a)-(2b). Then the calculated intermediate value ($CP_i$ estimated) is compared with the extracted $SP_T$. Once $CP_i$ is equal to $SP_T$, this marks the starting point of the delta measurement data to be included in the SSR2 and sent to the server. As described above, the second measurement report may include a second device digital signature and a delta measurement data $\Delta_{SML}$. However, if the current system state did not change compared to the previous attested system state $SP_T$, the $\Delta_{SML}$ can be omitted as it would not provide any new information. Thus, $\Delta_{SML}$ is not always necessary in a re-attestation process. If the previous attested system state $SP_T$ did nod not change, the second measurement report without a $\Delta_{SML}$ is sufficient for a server to accept the current system state as reliable.

603: Sending the second measurement report (e.g. SSR2) to the server so that the server can re-attest it.

The process of re-attestation is described in the following fourth method embodiment of the invention.

In traditional attestation process, a device always sends complete measurement data to a server. The size of measurement data can grow extensively large, especially on devices that are frequently updated and have a long uptime, as the measurement data only resets at device boot. Therefore both the bandwidth used to send the complete measurement data and the computation time consumed during the traditional attestation process are considerably high.

In this embodiment, the second measurement report only includes a delta measurement data which does not included any already attested measurement data. Therefore, the delta measurement data will minimize data sizes of the measurement report and thus reduce both the bandwidth and computational time.

The delta measurement data also helps to protect the device privacy because only partial information of the device needs to be sent to the server.

Figure 7 is a schematic flowchart of data attestation method according to a fourth embodiment of the present invention. The server in this embodiment attests the second measurement report including the digital certification. It may be the first server issued the digital certification or other server (also called second server) different from the first server. The process of this embodiment includes:

701: Sending the second attestation request to the device to initiate a re-attestation process.

The second attestation request is received by the device as described in step 601 of the third method embodiment of this invention.

702: Receiving a second measurement report from the device.

Details of the second measurement report have been described in step 602 of previous third method embodiment.

703: Verifying the received measurement report.

As described in step 602, the measurement report is generated based on a digital certification (e.g. TSC). Accordingly, the server in this embodiment attests whether the measurement report fulfills a preset condition according to the digital certification (e.g. TSC). The verification process to verify of the measurement report may include:

(i): Verifying the second device digital signature included in the second measurement report.

As described in the previous third method embodiments, the second measurement report may include a second device digital signature (e.g. Quote2). This device digital signature may include a first estimated value (SPT) extracted from the digital certification (e.g. TSC) issued by the first server. Optionally, the second device digital signature may include both a second estimated value (SP2) and the first signed estimated value ($SP_T$).

The server attests the second measurement report (SSR2) by verifying the second device digital signature (Quote2) via decrypting the second device digital signature (Quote2) with a key. If the server attests the second measurement report successfully, the first estimated value ($SP_T$) and the second estimated value (SP2) can be extracted from the second device digital signature (Quote2). Henceforth the device state represented by the second measurement report is considered as being reliable.

If the second device digital signature (Quote2) includes an arbitrary number (e.g. Nonce), the arbitrary number, which is known to the attesting server, is also compared as described in the previous method embodiments.

If a secure compression function was used in function (3) as described in step 602 the first estimated value $SP_T$ is extracted directly from the second system measurement report (e.g. SSR2). In order to verify the digital signature (e.g. Quote2), function (3) is applied to the extracted first estimated value (e.g. $SP_T$) and arbitrary data (e.g. Nonce) accordingly. The result of the compression function may then be used to verify the digital signature (e.g. Quote2), similarly as described before.

If the second measurement report is encrypted with public key cryptosystem, then the designated decryption key would be used here to verify measurement report. However, a symmetric or hybrid cryptosystem is also applicable to this invention, as long as a pre-shared key was established before or within a session.

(ii): Verifying the delta measurement data included in the second measurement report.

The process of verifying the delta measurement data is similar to the one performed in step 503(ii) in the second method embodiment. The difference includes that the first estimated value ($SP_T$) extracted from the second measurement report is used as the initial value when computing a second CP.

Similarly to the previous second method embodiment, if the second CP is equal to the second estimated value (SP2), the integrity of the delta measurement data is verified successfully.

Table 2 demonstrates a process of calculating the second CP in this embodiment. Table 2 is similar to Table 1. The only difference is that the estimated value ($SP_T$) from the digital certification (TSC) is used as the initial value for the first computation.

Table 1

| CP | Template Value $m_i$ | Filename |
|---|---|---|
| Starting Value from $SP_T$:<br>bf24d17301b89eaa485ed6c7a5be1b33df529df4 | | |
| e77afeb9a8b9df70de52alb36e763167a23b6df0<br>76f770da9612dca587fc2a9010c151f901ae46dd<br>78353899ddbe0f553747cecda00d4d05349e522a<br>245db06e7b14c5da71fe1849f1cc26186dcec879<br>633d561adbdd233da56fbbddd58f6 27e0c15918e | ccd151cce3490958ae77d0d6261d7f12450800b9<br>c78f4cecff4b004c9956c84628e6514a4d39881d<br>af9c6b7821dc27fa1a5801af108ebb33d8253865<br>214c1d89e94ef8e89248a9b010cb7c050b6eef37<br>2d8f5f5298011a4b895d1417da60c0 7243e0afbc | /sbin/init<br>/lib/x86_64/ld-2.19.so<br>/lib/libachk.so<br>/bin/hostname<br>/sbin/ureadahead |
| Expected Result from SP:<br>633d561adbdd233da56fbbddd58f6 27e0c15918e | | |

The second CP in this embodiment is calculated as:

**e77afeb9a8b9df70de52a1b36e763167a23b6df0=** sha1(bf24d17301b89eaa485ed6c7a5be1b33df529df4}
‖ccd151cce3490958ae77d0d6261d7f1 2450800b9

**76f770da9612dea587fe2a9010e151f901ae46dd=**
sha(1e77afeb9a8b9df70de52a1b36e763167a23b6df0‖c78f4cecff4b004c9956c84628e6514a4 d39881d

...

...

**633d561adbdd233da56fbbddd58f627e0c15918e=**
sha1(245db06e7b14c5da71fe1849f1cc26186dcec879‖2d8f5f5298011a4b895d1417da60c072 43e0afbc

As mentioned in step 602 of the third method embodiment, if the device state does not change compared to the previous attested device state $SP_T$, the delta measurement data $\Delta_{SML}$ can be omitted because it would not provide any new information and thus is not necessary to be involved in the re-attestation process. The second measurement report without the delta measurement data $\Delta_{SML}$ is also sufficient for a server in order to accept the current system state as reliable. For example, if a server does not have ability of verifying measurement data. In this case, the server just verifies a device digital signature in a measurement report to decide whether the state represented by the measurement report is reliable.

704: Creating a new digital certificate and send it to the device.

If the re-attestation process above is successful, the server in this embodiment generates a new digital certification (e.g. TSC) including the second estimated value (SP2) which is also called current Signed PCR $SP_{T+1}$ replacing the old $SP_T$ generated in the previous attestation.

The process of this step is the same to that described in step 504 of the second method embodiment of this invention.

Following the example given in Table 2, the start value $SP_T$ and the newly verified estimated value $SP_{T+1}$ are:

$$SP_T = bf24d17301b89eaa485ed6c7a5be1b33df529df4$$

$$SP_{T+1} = 633d561adbdd233da56fbbddd58f627e0c15918e$$

The $SP_{T+1}$ becomes the new carry-over value in a new digital certification, is sent to the device, and can be used in following re-attestation process.

The server in this embodiment may not have ability to perform steps 703(ii) and 704 above. Therefore steps 703(ii) and 704 are optional. Even in this case, this embodiment has benefit of saving data exchange since the device only needs to send a digital signature to the server. Moreover, the efficiency of attestation is improve because the server can decide the reliability of a measurement report by simply verifying the signature instead of measurement data which reduces the computational effort and minimizing data sizes to limit bandwidth usage, necessary to appraise a certain system state.

In this embodiment, the server receives a second measurement report only including a delta measurement data without any attested measurement data. Therefore, the re-attestation is faster than the traditional way.

The delta measurement data also helps to protect the device privacy because the server does not need to receive all information of the device.

**Claims**

1. A server for data attestation, comprising:

    an interface (211) for communication between the server and a device; and
    a processor (212) configured to communicate with the device through the interface (211);
    wherein during the communication with the device, the processor (212) is configured to:

send an attestation request to the device;
receive a first measurement report from the device;
attest the first measurement report by determining whether the first measurement report fulfills a preset condition;
create a digital certification if the first measurement report fulfills the preset condition; and
send the digital certification to the device;
wherein the processor (212) is further configured to:

receive a second measurement report from the device, wherein the second measurement report includes the digital certification; and
attest whether the second measurement report fulfills a second preset condition based on the digital certification.

**2.** The server according to claim 1, wherein the processor (212) is configured to create the digital certification by: generating a server digital signature based on a first estimated value included in the first measurement report.

**3.** The server according to claim 2, wherein the processor (212) is configured to generate the server digital signature according to the first estimated value included in the first measurement report by:

calculating a secure compression of the first estimated value;
encrypting the calculated secure compression with a key to generate the server digital signature.

**4.** The server according to claim 2 or 3, wherein the processor (212) is configured to generate the digital certification by encapsulating the first estimated value and the server digital signature.

**5.** A device for data attestation, comprising:

an interface (201) for communication between the device and a first server;
a security module (203) configured to generate a first estimated value;
a processor (202) adapted to generate a first measurement report based on the first estimated value;
wherein during the communication between the device and a server, the processor (202) is further configured to:

receive an first attestation request from the first server;
send the first measurement report to the first server; and
receive a digital certification from the first server, wherein the digital certification is created by the first server according to the first measurement report when the first server determined that the first measurement report fulfills a preset condition;
wherein after receiving the digital certification, the processor (202) is further configured to:

generate a second measurement report based on the received digital certification, the digital certification being included in the second measurement report; and
send the second measurement report to the first server or a second server for attestation.

**6.** The device according to claim 5, wherein:

the received digital certification includes a server digital signature; and
the second measurement report includes a device digital signature including the server digital signature.

**7.** The device according to claim 6, wherein the security module (203) is further configured to generate a second estimated value; wherein the device digital signature further includes the second estimated value.

**8.** The device according to any of claims 5-7, wherein:

the first measurement report further includes a first measurement data;
the second measurement report further includes a difference measurement data between the first measurement data and a second measurement data, wherein the first measurement data is a subset of the second measurement data.

**9.** The device according to claim 8, wherein the processor (202) is further configured to calculate the difference between the first measurement data and the second measurement data by:

extracting a first estimated value from the digital certification;
calculating intermediate estimated values, based on the second measurement data;
comparing the intermediate estimated values against the extracted first estimated value to determine one or more entries in the second measurement data corresponding to additional measurements not included in the first measurement data; and
generating the difference measurement data, wherein the difference measurement data includes the one or more determined entries.

**10.** A server for data attestation, comprising:

an interface (211) for communication between the server and a device;
a processor (212) configured to communicate with the device through the interface; wherein during the communication with the device, the processor (212) is configured to:

receive a second measurement report from the device, wherein the second measurement report is generated by the device based on a digital certification generated by another server, the digital certification being included in the second measurement report, wherein the digital certification is generated by said another server upon attesting a first measurement report received by said another server from the device; and
attest whether the second measurement report fulfills a preset condition according to the digital certification.

**11.** The server according to claim 10, wherein:

the received digital certification includes a server digital signature; and
the measurement report includes a device digital signature including the server digital signature.

**12.** The server according to claim 11, wherein the processor (212) is further configured to attest the second measurement report by verifying the device digital signature.

**13.** The server according to claim 12, wherein the device digital signature further comprises a second estimated value and the server digital signature; wherein the processor (212) is configured to verify the device digital signature by: decrypting the device digital signature with a key to extract the second estimated value and the digital signature.

**14.** A system for data attestation, including a server according to any of claims 1-4 and a device according to any of claims 5-9.

**15.** The system of claim 14, further includes a server according to any of claims 10-13, where the server of claim 14 is the other server in claims 10-13.

**16.** A method for data attestation, including:

sending (501), by a server, an attestation request to the device;
receiving (502), by the server, a first measurement report from the device;
attesting (503), by the server, the first measurement report by determining whether the first measurement report fulfills the preset condition;
generating (504), by the server, a digital certification if the first measurement report fulfills the preset condition; and
sending (505), by the server, the digital certification to the device;
wherein the method further includes:

receiving, by the server, a second measurement report from the device, wherein the second measurement report includes the digital certification; and
attesting, by the server, whether the second measurement report fulfills a second preset condition based on the digital certification.

**17.** A method for data attestation, including:

receiving (401), by a device, a first attestation request from a server;
sending (402), by the device, a first measurement report to the first server; and
receiving (403), by the device, a digital certificate from the first server, the digital certificate being generated by the server if the first measurement report is determined to fulfill a preset condition;
wherein after receiving the digital certification, the method further includes:

generating, by the device, a second measurement report based on the received digital certification, the digital certification being included in the second measurement report; and
sending, by the device, the second measurement report to the first server or a second server for attestation.

18. A method according to claim 17, further including:

receiving (601), by the device, a second attestation request from a server;
generating (602), by the device, a second measurement report to the server based on the received digital certification; and
sending (603), by the device, the second measurement report to the server so that the server can re-attest it.

19. A method for data attestation, includes:

receiving (702), by a server, a second measurement report from a device, wherein the second measurement report is generated by the device according to a digital certification generated by another server, the digital certification being included in the second measurement report, wherein the digital certification is generated by the other server upon attesting a first measurement report received by the other server from the device; and
attesting (703), by the server, whether the second measurement report fulfills a preset condition according to the digital certification.

**Patentansprüche**

1. Server zur Datenbescheinigung, aufweisend:

eine Schnittstelle (211) zur Kommunikation zwischen dem Server und einer Vorrichtung; und
einen Prozessor (212), der konfiguriert ist, über die Schnittstelle (211) mit der Vorrichtung zu kommunizieren;
wobei während der Kommunikation mit der Vorrichtung der Prozessor (212) konfiguriert ist zum:

Senden einer Bescheinigungsanforderung an die Vorrichtung;
Empfangen eines ersten Messberichts von der Vorrichtung;
Bescheinigen des Messberichts durch Bestimmen, ob der erste Messbericht eine voreingestellte Bedingung erfüllt;
Erstellen einer digitalen Zertifizierung, wenn der erste Messbericht die voreingestellte Bedingung erfüllt; und
Senden der digitalen Zertifizierung an die Vorrichtung;
wobei der Prozessor (212) ferner konfiguriert ist zum:

Empfangen eines zweiten Messberichts von der Vorrichtung, wobei der zweite Messbericht die digitale Zertifizierung aufweist; und
Bescheinigen, ob der zweite Messbericht eine zweite voreingestellte Bedingung erfüllt, basierend auf der digitalen Zertifizierung.

2. Server nach Anspruch 1, wobei der Prozessor (212) konfiguriert ist, die digitale Zertifizierung zu erzeugen durch:
Erzeugen einer digitalen Serversignatur basierend auf einem ersten geschätzten Wert, der in dem ersten Messbericht enthalten ist.

3. Server nach Anspruch 2, wobei der Prozessor (212) konfiguriert ist, die digitale Serversignatur gemäß dem ersten geschätzten Wert, der in dem ersten Messbericht enthalten ist, zu erzeugen durch:

Berechnen einer sicheren Kompression des ersten geschätzten Wertes;
Verschlüsseln der berechneten sicheren Kompression mit einem Schlüssel, um eine digitale Signatur des Servers zu erzeugen.

**4.** Server nach Anspruch 2 oder 3, wobei der Prozessor (212) konfiguriert ist, die digitale Zertifizierung durch Verkapseln des ersten geschätzten Wertes und der digitalen Signatur des Servers zu erzeugen.

**5.** Vorrichtung zur Datenbescheinigung, aufweisend:

eine Schnittstelle (201) zur Kommunikation zwischen der Vorrichtung und einem ersten Server;
ein Sicherheitsmodul (203), das konfiguriert ist, einen ersten geschätzten Wert zu erzeugen;
einen Prozessor (202), der angepasst ist, einen ersten Messbericht basierend auf dem ersten geschätzten Wert zu erzeugen;
wobei während der Kommunikation zwischen der Vorrichtung und einem Server der Prozessor (202) ferner konfiguriert ist zum:

Empfangen einer ersten Bescheinigungsanforderung von dem ersten Server;
Senden des ersten Messberichts an den ersten Server; und
Empfangen einer digitalen Zertifizierung von dem ersten Server, wobei die digitale Zertifizierung von dem ersten Server gemäß dem ersten Messbericht erzeugt wird, wenn der erste Server bestimmt, dass der erste Messbericht eine voreingestellte Bedingung erfüllt;
wobei der Prozessor (202) nach dem Empfang der digitalen Zertifizierung ferner konfiguriert ist zum: Erzeugen eines zweiten Messberichts basierend auf der empfangenen digitalen Zertifizierung, wobei die digitale Zertifizierung in dem zweiten Messbericht enthalten ist; und
Senden des zweiten Messberichts an den ersten Server oder einen zweiten Server zur Bescheinigung.

**6.** Vorrichtung nach Anspruch 5, wobei
die erhaltene digitale Zertifizierung eine digitale Signatur des Servers aufweist; und der zweite Messbericht eine digitale Signatur der Vorrichtung aufweist, die die digitale Signatur des Servers aufweist.

**7.** Vorrichtung nach Anspruch 6, wobei das Sicherheitsmodul (203) ferner konfiguriert ist, einen zweiten geschätzten Wert zu erzeugen; wobei die digitale Signatur der Vorrichtung ferner den zweiten geschätzten Wert aufweist.

**8.** Vorrichtung nach einem der Ansprüche 5 bis 7, wobei:

der erste Messbericht ferner erste Messdaten aufweist;
der zweite Messbericht ferner Differenzmessdaten zwischen den ersten Messdaten und den zweiten Messdaten aufweist, wobei die ersten Messdaten eine Teilmenge der zweiten Messdaten sind.

**9.** Vorrichtung nach Anspruch 8, wobei der Prozessor (202) ferner konfiguriert ist, die Differenz zwischen den ersten Messdaten und den zweiten Messdaten zu berechnen, durch:

Extrahieren eines ersten geschätzten Wertes aus der digitalen Zertifizierung;
Berechnen von geschätzten Zwischenwerten basierend auf den zweiten Messdaten;
Vergleichen der geschätzten Zwischenwerte mit dem extrahierten ersten geschätzten Wert, um einen oder mehrere Einträge in den zweiten Messdaten zu bestimmen, die zusätzlichen Messungen entsprechen, die nicht in den ersten Messdaten enthalten sind; und
Erzeugen der Differenzmessdaten, wobei die Differenzmessdaten den einen oder die mehreren bestimmten Einträge aufweisen.

**10.** Server zur Datenbescheinigung, aufweisend:

eine Schnittstelle (211) zur Kommunikation zwischen dem Server und einer Vorrichtung;
einen Prozessor (212), der konfiguriert ist, über die Schnittstelle mit der Vorrichtung zu kommunizieren; wobei der Prozessor (212) während der Kommunikation mit der Vorrichtung konfiguriert ist zum:

Empfangen eines zweiten Messberichts von der Vorrichtung, wobei der zweite Messbericht durch die Vorrichtung basierend auf einer von einem anderen Server erzeugten digitalen Zertifizierung erzeugt wird, wobei die digitale Zertifizierung in dem zweiten Messbericht enthalten ist, wobei die digitale Zertifizierung auf ein Bescheinigen eines durch den anderen Server von der Vorrichtung empfangenen ersten Messberichts hin von dem anderen Server erzeugt wird; und
Bescheinigen, ob der zweite Messbericht eine vorgegebene Bedingung erfüllt, gemäß der digitalen Zertifizierung.

**11.** Server nach Anspruch 10, wobei
die empfangene digitale Zertifizierung eine digitale Signatur des Servers aufweist; und der Messbericht eine digitale Signatur der Vorrichtung aufweist, die die digitale Signatur des Servers aufweist.

**12.** Server nach Anspruch 11, wobei der Prozessor (212) ferner konfiguriert ist, den zweiten Messungsbericht durch Verifizieren der digitalen Signatur der Vorrichtung zu bescheinigen.

**13.** Server nach Anspruch 12, wobei die digitale Signatur der Vorrichtung ferner einen zweiten geschätzten Wert und die digitale Signatur des Servers aufweist; wobei der Prozessor (212) konfiguriert ist, die digitale Signatur der Vorrichtung zu verifizieren durch:
Entschlüsseln der digitalen Signatur der Vorrichtung mit einem Schlüssel, um den zweiten geschätzten Wert und die digitale Signatur zu extrahieren.

**14.** System zur Datenbescheinigung, aufweisend einen Server nach einem der Ansprüche 1 bis 4 und eine Vorrichtung nach einem der Ansprüche 5 bis 9.

**15.** System nach Anspruch 14, ferner aufweisend einen Server nach einem der Ansprüche 10 bis 13, wobei der Server nach Anspruch 14 der andere Server in den Ansprüchen 10 bis 13 ist.

**16.** Verfahren zur Datenbescheinigung, aufweisend:

Senden (501), durch einen Server, einer Bescheinigungsanforderung an die Vorrichtung;
Empfangen (502), durch den Server, eines ersten Messberichts von der Vorrichtung;
Bescheinigen (503), durch den Server, des ersten Messberichts durch Bestimmen, ob der erste Messbericht die voreingestellte Bedingung erfüllt;
Erzeugen (504), durch den Server, einer digitalen Zertifizierung, wenn der erste Messbericht die voreingestellte Bedingung erfüllt; und
Senden (505), durch den Server, der digitalen Zertifizierung an die Vorrichtung;
wobei das Verfahren ferner aufweist:
Empfangen, durch den Server, eines zweiten Messberichts von der Vorrichtung, wobei der zweite Messbericht die digitale Zertifizierung aufweist; und Bescheinigen, durch den Server, ob der zweite Messbericht eine zweite voreingestellte Bedingung erfüllt, basierend auf der digitalen Zertifizierung.

**17.** Verfahren zur Datenbescheinigung, aufweisend:

Empfangen (401), durch eine Vorrichtung, einer ersten Bescheinigungsanforderung von einem Server;
Senden (402), durch die Vorrichtung, eines ersten Messberichts an den ersten Server; und
Empfangen (403), durch die Vorrichtung, eines digitalen Zertifikats von dem ersten Server, wobei das digitale Zertifikat durch den Server erzeugt wird, wenn bestimmt wird, dass der erste Messbericht eine voreingestellte Bedingung erfüllt;
wobei nach dem Empfang der digitalen Zertifizierung das Verfahren ferner aufweist:

Erzeugen, durch die Vorrichtung, eines zweiten Messberichts basierend auf der erhaltenen digitalen Zertifizierung, wobei die digitale Zertifizierung in dem zweiten Messbericht enthalten ist; und
Senden, durch die Vorrichtung, des zweiten Messberichts an den ersten Server oder einen zweiten Server zur Bescheinigung.

**18.** Verfahren nach Anspruch 17, ferner aufweisend:

Empfangen (601), durch die Vorrichtung, einer zweiten Bescheinigungsanforderung von einem Server;
Erzeugen (602), durch die Vorrichtung, eines zweiten Messberichts an den Server basierend auf der empfangenen digitalen Zertifizierung; und
Senden (603), durch die Vorrichtung, des zweiten Messberichts an den Server, so dass der Server ihn erneut bescheinigen kann.

**19.** Verfahren zur Datenbescheinigung, aufweisend:

Empfangen (702), durch einen Server, eines zweiten Messberichts von einer Vorrichtung, wobei der zweite Messbericht von der Vorrichtung gemäß einer von einem anderen Server erzeugten digitalen Zertifizierung erzeugt wird, wobei die digitale Zertifizierung in dem zweiten Messbericht enthalten ist, wobei die digitale Zertifizierung auf ein Bescheinigen eines durch den anderen Server von der Vorrichtung empfangenen ersten Messberichts hin von dem anderen Server erzeugt wird; und

Bescheinigen (703), durch den Server, ob der zweite Messbericht eine voreingestellte Bedingung erfüllt, gemäß der digitalen Zertifizierung.

**Revendications**

1. Serveur pour une attestation de données, comprenant :

   une interface (211) pour la communication entre le serveur et un dispositif ; et
   un processeur (212) configuré pour communiquer avec le dispositif par l'intermédiaire de l'interface (211) ;
   dans lequel pendant la communication avec le dispositif, le processeur (212) est configuré pour :

      envoyer une demande d'attestation au dispositif ;
      recevoir un premier rapport de mesure du dispositif ;
      attester le premier rapport de mesure du dispositif en déterminant si le premier rapport de mesure satisfait à une condition prédéfinie ;
      créer une certification numérique si le premier rapport de mesure satisfait à la condition prédéfinie ; et
      envoyer la certification numérique en dispositif ;
      dans lequel le processeur (212) est en outre configuré pour :

         recevoir un second rapport de mesure du dispositif, le second rapport de mesure incluant la certification numérique ; et
         attester si le second rapport de mesure satisfait à une seconde condition prédéfinie sur la base de la certification numérique.

2. Serveur selon la revendication 1, dans lequel le processeur (212) est configuré pour créer la certification numérique par :
   la génération d'une signature numérique de serveur sur la base d'une première valeur estimée incluse dans le premier rapport de mesure.

3. Serveur selon la revendication 2, dans lequel le processeur (212) est configuré pour générer la signature numérique de serveur conformément à la première valeur estimée incluse dans le premier rapport de mesure par :

   le calcul d'une compression sécurisée de la première valeur estimée ;
   le chiffrage de la compression sécurisée calculée au moyen d'une clé pour générer la signature numérique de serveur.

4. Serveur selon la revendication 2 ou 3, dans lequel le processeur (212) est configuré pour générer la certification numérique par l'encapsulage de la première valeur estimée et de la signature numérique de serveur.

5. Dispositif pour l'attestation de données, comprenant :

   une interface (201) pour la communication entre le dispositif et un premier serveur ;
   un module de sécurité (203) configuré pour générer une première valeur estimée ;
   un processeur (202) adapté pour générer un premier rapport de mesure sur la base de la première valeur estimée ;
   dans lequel pendant la communication entre le dispositif et un serveur, le processeur (202) est en outre configuré pour :

      recevoir une première demande d'attestation du premier serveur ;
      envoyer le premier rapport de mesure au premier serveur ; et
      recevoir une certification numérique du premier serveur, la certification numérique étant créée par le premier serveur conformément au premier rapport de mesure lorsque le premier serveur a déterminé que le premier rapport de mesure satisfait à une condition prédéfinie ;

dans lequel après la réception de la certification numérique, le processeur (202) est en outre configuré pour :

génération un second rapport de mesure sur la base de la certification numérique reçue, la certification numérique étant incluse dans le second rapport de mesure ; et

envoyer le second rapport de mesure au premier serveur ou à un second serveur pour l'attestation.

**6.** Dispositif selon la revendication 5, dans lequel :

la certification numérique reçue inclut une signature numérique de serveur ; et

le second rapport de mesure inclut une signature numérique de dispositif incluant la signature numérique de serveur.

**7.** Dispositif selon la revendication 6, dans lequel le module de sécurité (203) est en outre configuré pour générer une seconde valeur estimée ; dans lequel la signature numérique de dispositif inclut en outre la seconde valeur estimée.

**8.** Dispositif selon l'une quelconque des revendications 5 à 7, dans lequel :

le premier rapport de mesure inclut des premières données de mesure ;

le second rapport de mesure inclut en outre des données de mesure de différence entre les premières données de mesure et des secondes données de mesure, les premières données de mesure étant un sous-ensemble des secondes données de mesure.

**9.** Dispositif selon la revendication 8, dans lequel le processeur (202) est en outre configuré pour calculer la différence entre les premières données de mesure et les secondes données de mesure par :

l'extraction d'une première valeur estimée de la certification numérique ;

le calcul de valeurs estimées intermédiaires, sur la base des secondes données de mesure ;

la comparaison des valeurs estimées intermédiaires avec la première valeur estimée extraite pour déterminer un ou plusieurs intrants dans les secondes données de mesure correspondant à des mesures supplémentaires non incluses dans les premières données de mesure ; et

la génération des données de mesure de différence, les données de mesure de différence incluant le ou les intrants déterminés.

**10.** Serveur pour l'attestation de données, comprenant :

une interface (211) pour la communication entre le serveur et un dispositif ;

un processeur (212) configuré pour communiquer avec le dispositif par l'intermédiaire de l'interface ; dans lequel pendant la communication avec le dispositif, le processeur (212) est configuré pour :

recevoir un second rapport de mesure du dispositif, le second rapport de mesure étant généré par le dispositif sur la base d'une certification numérique générée par un autre serveur, la certification numérique étant incluse dans le second rapport de mesure, la certification numérique étant générée par ledit autre serveur suite à l'attestation d'un premier rapport de mesure reçu par ledit autre serveur depuis le dispositif ; et

attester si le second rapport de mesure satisfait à une condition prédéfinie conformément à la certification numérique.

**11.** Serveur selon la revendication 10, dans lequel :

la certification numérique reçue inclut une signature numérique de serveur ; et

le rapport de mesure inclut une signature numérique de dispositif incluant la signature numérique de serveur.

**12.** Serveur selon la revendication 11, dans lequel le processeur (212) est en outre configuré pour attester le second rapport de mesure par la vérification de la signature numérique de dispositif.

**13.** Serveur selon la revendication 12, dans lequel la signature numérique de dispositif comprend en outre une seconde valeur estimée et la signature numérique de serveur ; dans lequel le processeur (212) est configuré pour vérifier la signature numérique de dispositif par :

le déchiffrage de la signature numérique de dispositif au moyen d'une clé pour extraire la seconde valeur estimée et la signature numérique.

14. Système pour l'attestation de données, incluant un serveur selon l'une quelconque des revendications 1 à 4 et un dispositif selon l'une quelconque des revendications 5 à 9.

15. Système selon la revendication 14, incluant en outre un serveur selon l'une quelconque des revendications 10 à 13, dans lequel le serveur de la revendication 14 est l'autre serveur des revendications 10 à 13.

16. Procédé pour l'attestation de données, comprenant :

l'envoi (501), par un serveur, d'une demande d'attestation à un dispositif ;
la réception (502), par le serveur, d'un premier rapport de mesure depuis le dispositif ;
l'attestation (503), par le serveur, du premier rapport de mesure par la détermination de si le premier rapport de mesure satisfait à la condition prédéfinie ;
la génération (504), par le serveur, d'une certification numérique si le premier rapport de mesure satisfait à la condition prédéfinie ; et
l'envoi (505), par le serveur, de la certification numérique au dispositif ;
dans lequel le procédé comprend en outre :

la réception, par le serveur, d'un second rapport de mesure depuis le dispositif, le second rapport de mesure incluant la certification numérique ; et
l'attestation, par le serveur, de si le second rapport de mesure satisfait à une seconde condition prédéfinie sur la base de la certification numérique.

17. Procédé pour l'attestation de données, comprenant :

la réception (401), par un dispositif, d'une première demande d'attestation depuis un serveur ;
l'envoi (402), par le dispositif, d'un premier rapport de mesure au premier serveur ; et
la réception (403), par le dispositif, d'un certificat numérique depuis le premier serveur, le certificat numérique étant généré par le serveur si le premier rapport de mesure est déterminé comme satisfaisant une condition prédéfinie ;
dans lequel après la réception de la certification numérique, le procédé comprend en outre :

la génération, par le dispositif, d'un second rapport de mesure sur la base de la certification numérique reçue, la certification numérique étant incluse dans le second rapport de mesure ; et
l'envoi, par le dispositif, du second rapport de mesure au premier serveur ou à un second serveur pour l'attestation.

18. Procédé selon la revendication 17, comprenant en outre :

la réception (601), par le dispositif, d'une seconde demande d'attestation depuis un serveur ;
la génération (602), par le dispositif, d'un second rapport de mesure pour le serveur sur la base de la certification numérique reçue ; et
l'envoi (603), par le dispositif, du second rapport de mesure au serveur de sorte que le serveur puisse l'attester de nouveau.

19. Procédé pour l'attestation de données, comprenant :

la réception (702), par un serveur, d'un second rapport de mesure depuis un dispositif, le second rapport de mesure étant généré par le dispositif conformément à une certification numérique générée par un autre serveur, la certification numérique étant incluse dans le second rapport de mesure, la certification numérique étant générée par l'autre serveur suite à l'attestation d'un premier rapport de mesure reçu par l'autre serveur depuis le dispositif ; et
l'attestation (703), par le serveur, de si le second rapport de mesure satisfait à une condition prédéfinie conformément à la certification numérique.

Figure 1a

EP 3 193 485 B1

EP 3 193 485 B1

Figure 1b

Figure 2a

Figure 2b

EP 3 193 485 B1

| Storage | PCR | AIK | Program Code |
|---|---|---|---|

| Nonce generator | Sha-1 engine | Key generation | RSA engine | Exec engine |
|---|---|---|---|---|

Figure 2c

Figure 2d

Figure 2e

Figure 3a

EP 3 193 485 B1

:TPM  :TEE  :TEAM  :RVD

**4:** $Nonce$

$tpmQuote(sha1(Nonce\|SP_T))$

$Quote$

**5:** $Quote =,$
$(Pcr, sha1(Nonce\|SP_T))_{AIK},$
$SP_T, \Delta_{SML}$

verify_quote($Quote, SP_T, Nonce, aik$)

SP

verify_SML_integrity($\Delta_{SML}, SP_T, SP$)

$True/False$

loop until EOF $\Delta_{SML}$     while $m_i$ is well known

verify_SML($m_i$)

$result$

create_Pcr_signature($SP$)

**6:** $SP_T$

$SP_T$

Figure 3b

Figure 3c

Figure 4

Sending the first attestation request to a device to initiate an attestation process. — 501

Receiving the first measurement report from the device. — 502

Attesting the first measurement report received from the device. — 503

Generating a digital certification if the first measurement report fulfills a preset condition. — 504

Sending the digital certification to the device. — 505

Figure 5

Receiving a second attestation request from a server.  601

Generating a second measurement report to the server  602

Sending the second measurement report to the server so that the server can re-attest it.  603

Figure 6

```
┌──────────────────────────────────────────┐
│  Sending the second attestation request to the   │  ── 701
│   device to initiate a re-attestation process.   │
└──────────────────────────────────────────┘
                    │
                    ▼
┌──────────────────────────────────────────┐
│  Receiving a second measurement report from   │  ── 702
│                 the device.                  │
└──────────────────────────────────────────┘
                    │
                    ▼
┌──────────────────────────────────────────┐
│   Attesting the second measurement report.    │  ── 703
└──────────────────────────────────────────┘
                    │
                    ▼
┌──────────────────────────────────────────┐
│  Creating a new digital certification and send it to  │  ── 704
│                 the device.                  │
└──────────────────────────────────────────┘
```

Figure 7

**EP 3 193 485 B1**

**Patent documents cited in the description**

- US 20110010543 A1
- US 20110035577 A1
- US 20120266209 A1